Europäisches Patentamt

European Patent Office

Office européen des brevets

(11) Veröffentlichungsnummer: **0 162 286**

**A1**

(12) **EUROPÄISCHE PATENTANMELDUNG**

(21) Anmeldenummer: **85104652.4**

(22) Anmeldetag: **17.04.85**

(51) Int. Cl.⁴: **F 16 K 11/048**

(30) Priorität: **22.05.84 DE 3418933**

(43) Veröffentlichungstag der Anmeldung:
**27.11.85 Patentblatt 85/48**

(84) Benannte Vertragsstaaten:
**BE CH DE FR GB IT LI**

(71) Anmelder: **ROBERT BOSCH GMBH**
**Postfach 50**
**D-7000 Stuttgart 1(DE)**

(72) Erfinder: **Schock, Manfred, Ing. grad.**
**Neuhalde 26**
**D-7140 Ludwigsburg(DE)**

(54) Steuerventil.

㊸ In einem 3 2-Magnetventil (11) ist eine Stufenbohrung (12) ausgebildet, in deren mittleren Abschnitt (16) mit kleinstem Durchmesser eine Spindel (25) angeordnet ist. Seine beiden Enden (24, 31) ragen mit Spiel in je eine Ausnehmung (23) bzw. (30) eines Ventilkörpers (20) bzw. (28). Diese sind den am Abschnitt (16) der Stufenbohrung (12) ausgebildeten Ventilsitzen (19, 27) zugeordnet. Da die Ventilkörper (20, 28) lose an der Spindel (25) angeordnet sind, schlagen die Ventilkörper (20, 28) nur mit ihrer eigenen, geringen Masse am jeweiligen Ventilsitz (19, 27) auf. Die Montage der Spindel (25) und der Ventilkörper (20, 28) in der Stufenbohrung (12) ist dadurch einfach.

FIG.1

Croydon Printing Company Ltd

EP 0 162 286 A1

ROBERT BOSCH GMBH, 7000 STUTTGART 1

<u>Steuerventil</u>

Stand der Technik

Die Erfindung geht aus von einem Steuerventil nach der Gattung des Hauptanspruchs. Bei einem derartigen bekannten Steuerventil sind die Ventilkörper fest am Steuerelement angeordnet. Dadurch baut das Steuerventil aufwendig. Die Montage des Steuerelements im Steuerventil ist kompliziert.

Vorteile der Erfindung

Das erfindungsgemäße Steuerventil mit den kennzeichnenden Merkmalen des Hauptanspruchs hat demgegenüber den Vorteil, daß die Montage einfach und billig ist. Gelangt einer der beiden Ventilkörper auf seinen Ventilsitz, so wirken keine großen Schlagkräfte auf den Ventilsitz und somit auf das Ventilgehäuse ein. Das Steuerelement ist gedämpft steuerbar. Einer der beiden Ventilkörper öffnet sowohl seinen zugewandten Ventilsitz, als auch steuert er zugleich die Öffnung der Entlüftungsbohrung. Das Ventilgehäuse samt Ventilsitze ist in einem Arbeitsgang herstellbar.

Durch die in den Unteransprüchen aufgeführten Maßnahmen
sind vorteilhafte Weiterbildungen und Verbesserungen der
im Hauptanspruch angegebenen Merkmale möglich.


Zeichnung


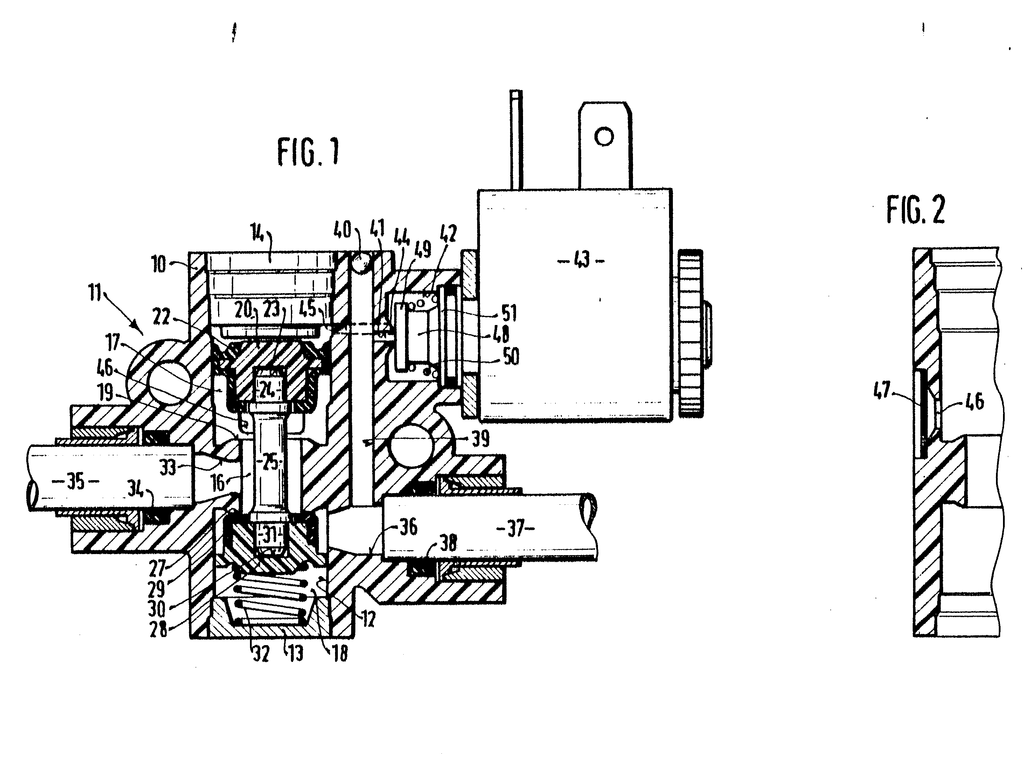

Ein Ausführungsbeispiel der Erfindung ist in der Zeichnung dargestellt und in der nachfolgenden Beschreibung
näher erläutert. Es zeigen Figur 1 einen Längsschnitt
durch ein Steuerventil und Figur 2 einen Schnitt durch
eine Einzelheit.


Beschreibung des Ausführungsbeispiels


In einem Gehäuse 10 eines 3/2-Magnetventils 11, das als
Druckluftventil eingesetzt ist, ist eine durchgehende
Stufenbohrung 12 ausgebildet, die auf beiden Seiten von
Verschlußteilen 13, 14 verschlossen ist. Beide Verschlußteile 13, 14 sind in die Stufenbohrung 12 eingepreßt.
Diese weist einen etwa mittigen Abschnitt 16 mit kleinstem
Durchmesser auf. Die zu beiden Seiten dieses Abschnitts 16
angeordneten Abschnitte 17, 18 der Stufenbohrung 12 haben
etwa gleichen Durchmesser und dienen als Druckräume. Die
zwischen den Abschnitten 16 und 17 gebildete Schulter bildet einen Ventilsitz 19 für einen Ventilkörper 20, der
gleitend im Abschnitt 17 geführt ist. Er ist aus Kunststoff hergestellt und hat eine äußere Schicht 22 aus Gummi.
Der Ventilkörper 20 weist eine mittige, dem Abschnitt 16
zugewandte Ausnehmung 23 auf. In diese taucht das eine Ende
24 einer Spindel 25 mit Spiel ein.


Die zwischen den Abschnitten 16 und 18 der Stufenbohrung 12
ausgebildete Schulter dient als Ventilsitz 27 für einen zweiten Ventilkörper 28, der im Abschnitt 18 gleitend geführt
ist. Er besteht ebenfalls aus Kunststoff und hat eine äußere

...

Schicht 29 aus Gummi. Er hat ferner eine mittige, dem Abschnitt 16 zugewandte Ausnehmung 30, in die das andere Ende 31 der Spindel 25 mit Spiel eintaucht. An die dem Abschnitt 16 der Stufenbohrung 12 abgewandte Seite des Ventilkörpers 28 legt sich das eine Ende einer im Abschnitt 18 der Stufenbohrung 12 angeordneten Druckfeder 32 an, deren anderes Ende am Verschlußteil 13 anliegt. Die Achsen der Spindel 25, der beiden Ventilkörper 20, 28 und der Stufenbohrung 12 sind deckungsgleich. Das Gehäuse 10 besteht auch aus Kunststoff, wobei die beiden Ventilsitze 19, 27 in einem Arbeitsgang angespritzt sind und keine Nachbehandlung notwendig ist.

Im Abschnitt 16 der Stufenbohrung 12 mündet eine Querbohrung 33, in der ein durch einen Dichtring 34 abgedichteter rohrförmiger Verbraucheranschluß 35 angeordnet ist. Nahe dem Ventilsitz 27 mündet in den Abschnitt 18 der Stufenbohrung 12 eine Querbohrung 36, in die ein rohrförmiger Pumpenanschluß 37 eingesetzt ist. Er ist durch einen Dichtring 38 abgedichtet. Von der Querbohrung 36 zweigt vor dem Pumpenanschluß 37 eine parallel zur Stufenbohrung 12 verlaufende Bohrung 39 ab, die an ihrem Ende von einem Verschlußteil 40 verschlossen ist. Von dieser führt eine Querbohrung 41 zu einer Ausnehmung 42, die durch einen am Gehäuse 10 angeflanschten Elektromagneten 43 verschlossen ist. Die Mündung der Querbohrung 41 in die Ausnehmung 42 ist als Ventilsitz 44 ausgebildet. Von der Ausnehmung 42 führt eine Querbohrung 45 in den Abschnitt 17 der Stufenbohrung 12. Sie ist in einer zweiten Ebene im Gehäuse 10 ausgebildet und mündet nahe dem Verschlußteil 14. Vom Abschnitt 17 der Stufenbohrung 12 führt nahe dem Ventilsitz 19 ein Durchgang 46 ins Freie, in der - wie in Figur 2 näher gezeigt - ein vor Verschmutzung schützendes Filtersieb 47 angeordnet ist.

In die Ausnehmung 42 ragt der Stößel 48 des Elektromagneten 43 und liegt mit der Stirnseite seines äußeren Bundes 49 auf dem Ventilsitz 44 auf. An die andere Seite des Bundes 49 legt sich das eine Ende einer Druckfeder 50 an, die mit ihrem anderen Ende an einer fest in der Ausnehmung 42 angeordeten Scheibe 51 anliegt.

Ist der Elektromagnet 43 entregt, so liegt der Stößel 48 durch die Kraft der Druckfeder 50 mit seiner Stirnseite auf dem Ventilsitz 44 auf. Der Abschnitt 17 der Stufenbohrung 12 ist über den Durchgang 46 und das Filtersieb 47 ins Freie entlüftet. Der Ventilkörper 20 ist druckentlastet und der Ventilkörper 28 liegt durch die Kraft der Druckfeder 32 auf seinem Ventilsitz 27 auf. Da das Ende der Spindel 25 mit Spiel in der Ausnehmung 30 des Ventilkörpers 28 angeordnet ist, schlägt der Ventilkörper 28 nur mit seiner eigenen geringen Masse auf den Ventilsitz 27 auf. Die Spindel 25 und der Ventilkörper 20 bewegen sich durch die Trägheitskraft weiter. Die Länge des Abschnitts 17 der Stufenbohrung 12 ist so ausgelegt, daß der Ventilkörper 20 nicht am Verschlußteil 14 anschlägt bevor der Ventilkörper 28 auf seinem Ventilsitz 27 aufliegt. Es wäre aber auch möglich, am Verschlußteil 14 einen Dämpfungskörper oder eine Feder anzuordnen, um Schläge auf das Ventilgehäuse 10 weitgehend zu vermeiden. Der Verbraucheranschluß 35 ist in dieser Stellung über die Querbohrung 33, den geöffneten Ventilsitz 19 und die Querbohrung 46 ins Freie entlastet.

Wird der Elektromagnet 43 erregt, so fährt sein Stößel 48 entgegen der Kraft der Druckfeder 50 ein, und der Ventilsitz 44 ist geöffnet. Das über den Pumpenanschluß 37 in die Querbohrung 36 und in die Bohrung 39 einströmende Druckmittel fließt über die Querbohrung 43 und den geöff-

...

neten Ventilsitz 44 in die Ausnehmung 42 und weiter über
die Querbohrung 45 in den obersten Teil des Abschnitts
17 der Stufenbohrung 12. Hier baut sich ein Druck auf,
der den Ventilkörper 20 auf seinen Ventilsitz 19 drückt.
Gleichzeitig wird durch den Ventilkörper 20 auch die
Querbohrung 46 verschlossen. Mit Hilfe der Spindel 25
wird aber auch vom auf den Ventilkörper 20 einwirkenden
Druck der Ventilkörper 28 entgegen der Kraft der Druckfeder 32 von seinem Ventilsitz 27 abgehoben. Das Druckmittel kann jetzt auch von der Querbohrung 36 über den
geöffneten Ventilsitz 27 in die Querbohrung 33 und in
den Verbraucheranschluß 35 strömen.

Durch die erfindungsgemäße Anordnung der Spindel 25 und
der beiden Ventilkörper 20, 28 ist eine leichte Montage
möglich. Die Spindel 25 kann leicht von beiden Seiten der
Stufenbohrung 12 aus in den Abschnitt 16 eingeschoben
werden. Die beiden Ventilkörper 20, 28 werden von beiden
Seiten in die Stufenbohrung 12 eingeführt und auf die
Enden 24, 31 der Spindel 25 aufgesetzt. Nachdem die Druckfeder 32 im Abschnitt 18 angeordnet ist, werden die beiden Verschlußteile 13, 14 in die Stufenbohrung 12 eingepreßt.

ROBERT BOSCH GMBH, 7000 STUTTGART 1

Ansprüche

1. Steuerventil (11), insbesondere für Druckluftbetrieb, mit einer Bohrung (12), in der ein Steuerelement angeordnet ist, das wahlweise Druckmittel von einem Pumpenanschluß (37) zu einem Verbraucheranschluß (35) oder vom Verbraucheranschluß (35) zu einer Entlüftungsbohrung (36) steuert, dadurch gekennzeichnet, daß das Steuerelement eine Spindel (25) aufweist, an deren Enden (24, 31) je ein Ventilkörper (20, 28) lose angeordnet ist.

2. Ventil nach Anspruch 1, dadurch gekennzeichnet, daß die Bohrung als Stufenbohrung (12) ausgebildet ist und daß diese einen mittleren Abschnitt (16) mit kleinstem Durchmesser aufweist, an dem zwei den Ventilkörpern (20, 28) zugewandte Ventilsitze (19, 27) angeordnet sind.

3. Ventil nach Anspruch 1 und/oder 2, dadurch gekennzeichnet, daß mindestens einer der Ventilkörper (20) in der Stufenbohrung (12) gleitend geführt und druckbeaufschlagbar ist.

4. Ventil nach einem der Ansprüche 1 bis 3, dadurch gekennzeichnet, daß am Ventilgehäuse (10) des Steuerventils (11) ein Elektromagnet (43) angeflanscht ist, dessen Stößel (48) eine Verbindung vom Pumpenanschluß (37) zum druckbeaufschlagbaren Ventilkörper (20) steuert.

...

19402 0162286

5. Ventil nach einem der Ansprüche 1 bis 4, dadurch gekennzeichnet, daß die Ventilkörper (20, 28) aus Kunststoff bestehen und von einer Schicht (22, 29) aus Gummi umhüllt sind.

6. Ventil nach einem der Ansprüche 1 bis 5, dadurch gekennzeichnet, daß das Ventilgehäuse (10) aus Kunststoff besteht.

7. Ventil nach einem der Ansprüche 1 bis 6, dadurch gekennzeichnet, daß in der Entlüftungsbohrung (46) ein Filter (47) angeordnet ist.

FIG. 1

FIG. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-2 055 972 (SAHLIN) <br> * Das ganze Dokument * | 1-3,5 | F 16 K 11/048 |
| A | US-A-2 408 883 (F.J. RODE) <br> * Figur 4 * | 1 | |
| A | US-A-2 611 391 (J. SAINSBURY) <br> * Figur 2 * | 4 | |
| A | DE-A-1 450 615 (NOSTORAG) <br> * Seite 2, letzter Absatz - Seite 3, erster Absatz * | 6 | |
| A | US-A-2 307 671 (DODGE) <br> * Seite 1, Spalte 2, Zeilen 15-20; Figur 5 * | 5 | |

RECHERCHIERTE SACHGEBIETE (Int. Cl.4)

F 16 K 11/00
F 16 K 31/00
F 15 B 13/00
F 16 K 51/00
F 16 J 1/00

Der vorliegende Recherchenbericht wurde für alle Patentansprüche erstellt

| Recherchenort <br> BERLIN | Abschlußdatum der Recherche <br> 06-08-1985 | Prüfer <br> GERTIG I. |
|---|---|---|